# EUROPEAN PATENT SPECIFICATION

(11) **EP 1 444 499 B1**
(45) Date of publication and mention of the grant of the patent: **07.06.2006**
(21) Application number: 02787619.2
(22) Date of filing: 08.11.2002
(51) Int. Cl.: G01N 1/28, B02C 17/14

(54) **LABORATORY APPARATUS FOR GRINDING LOOSE MATERIALS**
LABORGERÄT ZUR ZERKLEINERUNG VON SCHÜTTGUT
APPAREIL DE LABORATOIRE PERMETTANT DE MOUDRE DES MATERIAUX EN VRAC

(30) Priority: 13.11.2001 IT MO20010218
(43) Date of publication of application: 11.08.2004
(73) Proprietor: Berselli, Giorgio, 41020 Montagnana di Serramazzoni (IT)
(72) Inventor: Berselli, Giorgio, 41020 Montagnana di Serramazzoni (IT)
(74) Representative: Modiano, Micaela Nadia
(86) International application number: PCT/EP2002/012525
(87) International publication number: WO 2003/042663

(56) References cited:
- WO-A-00/71258
- WO-A-01/30502
- WO-A-99/59723
- US-A- 3 030 036
- US-A- 3 042 322
- US-A- 5 364 036

## Description

### Technical Field

The present invention relates to a laboratory apparatus for grinding loose materials.

### Backaround Art

Laboratories for the testing, research, control and development of several types of new or existing products, such as raw materials, enamels, screen printing pastes, mixes, dyes and the like, are known in the ceramics field.

The preparation of test samples generally entails a step for grinding and homogenizing the loose materials that compose the product to be tested.

Known types of laboratory apparatus for grinding loose materials are substantially constituted by a cabinet provided with an opening and closure door, which contains one or more rotation devices, each suitable to cause the rotation of a respective jar about a vertical axis.

Each jar comprises a container, provided with a mouth for introducing and withdrawing the materials, a plug for closing the mouth, and a charge of grinding media, constituted by beads.

These laboratory apparatuses, however, are not devoid of drawbacks, including the fact that the structure of the cabinets and the manual handling of the jars limit the dimensions and the capacity of the jars that can be used; this accordingly prevents the production of homogeneous test samples in quantities greater than those obtainable from a single jar.

It is noted that if it is necessary to prepare a test sample in quantities exceeding the actual capacity of a single jar, one grinds separately, by using a plurality of jars, quantities that are submultiples of the required quantity, each having the same composition and formulation as the sample.

Because of the possible human, instrument and environmental errors that are associated with any laboratory test, the compositions of the prepared submultiple quantities can be different one another, with their own grinding charges, with the risk of biasing the results of the tests being performed.

Another drawback of known apparatuses is that they require awkward and repeated manual operations for carrying, mounting and removing the jars from the cabinets, with consequent waste of time, human resources and costs.

In fact, technicians prepare each jar with the material to be ground, mount it and fix it inside the cabinet and, at the end of the grinding process, release it and remove it from the cabinet in order to withdraw the ground material therefrom.

US-A-3 030 03 6 discloses an apparatus for grinding loose materials as defined in the preamble of claim 1.

WO01/30502 also discloses an apparatus as defined in the preamble of claim 1.

WO 99/59723 also relates to a mill for grinding loose materials, having a closed container.

The aim of the present invention is to eliminate the above noted drawbacks of conventional apparatus by providing a laboratory apparatus for grinding loose materials that allows to prepare homogeneous test samples, does not require the execution of mounting and removal operations at each grinding cycle, and allows to improve the use of human resources and time utilization.

Within this aim, an object of the present invention is to provide a structure that is simple, relatively easy to provide in practice, safe in use, effective in operation, and relatively low in cost

This aim and this and other objects that will become better apparent hereinafter are achieved by the present laboratory apparatus for grinding loose materials, as defined in claim 1.

### Brief description of the Drawings

Further characteristics and advantages of the present invention will become better apparent from the detailed description of a preferred but not exclusive embodiment of a laboratory apparatus for grinding loose materials, illustrated only by way of non-limitative example in the accompanying drawings, wherein:

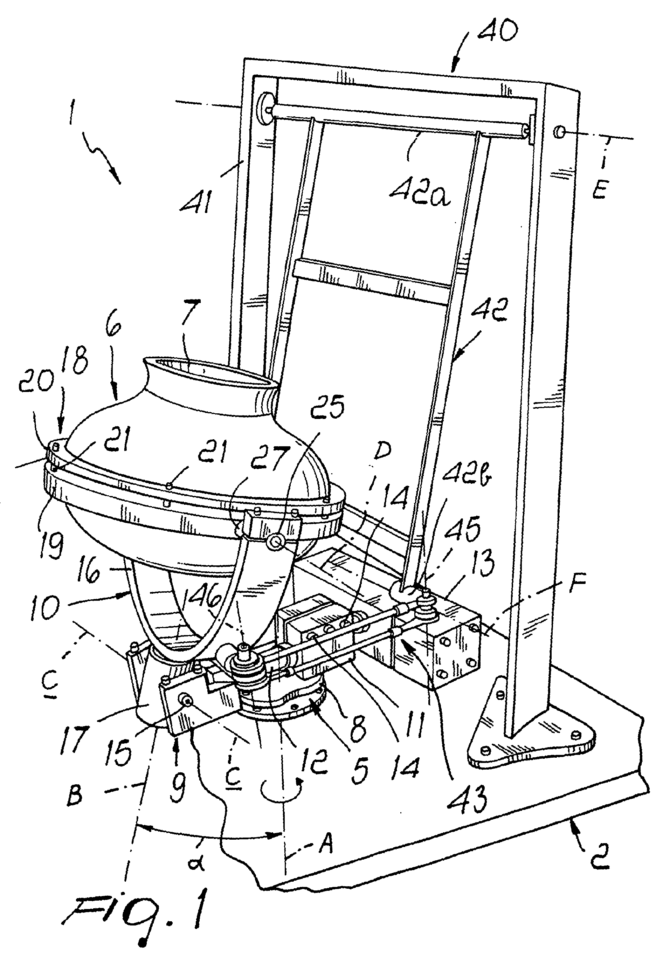

Figure 1 is a schematic axonometric view of an apparatus according to the invention;

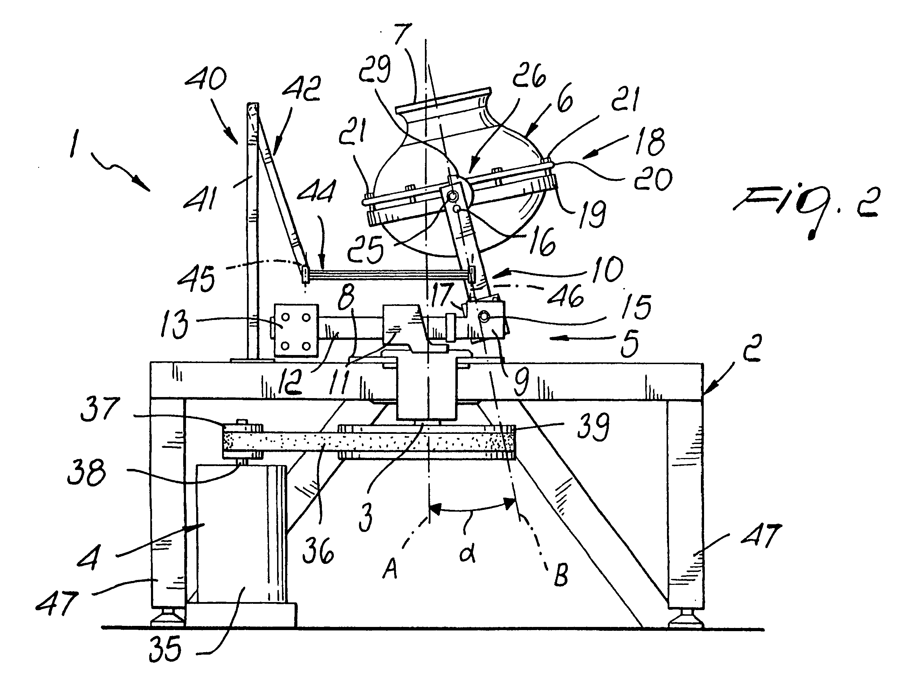

Figure 2 is a schematic side view of Figure 1;

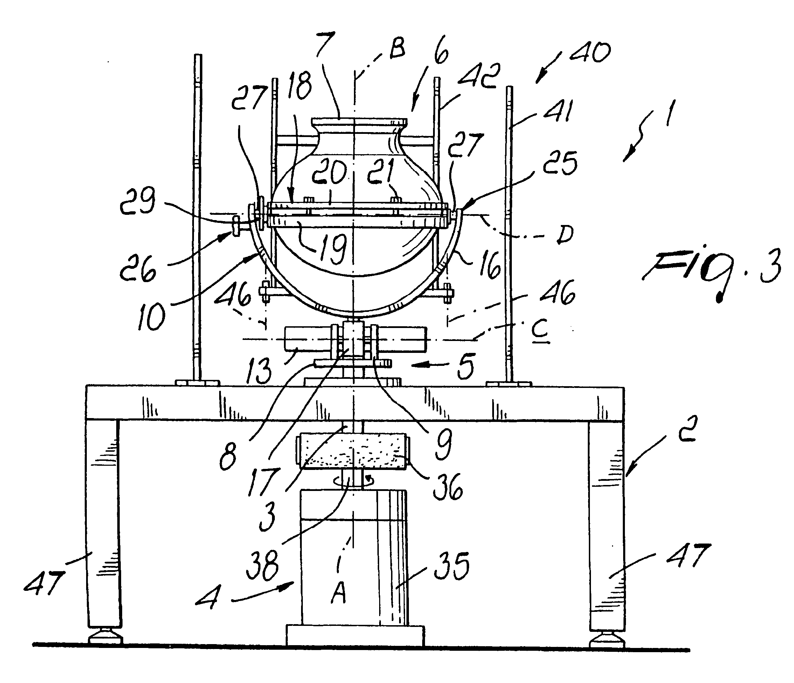

Figure 3 is a schematic front view of Figure 1;

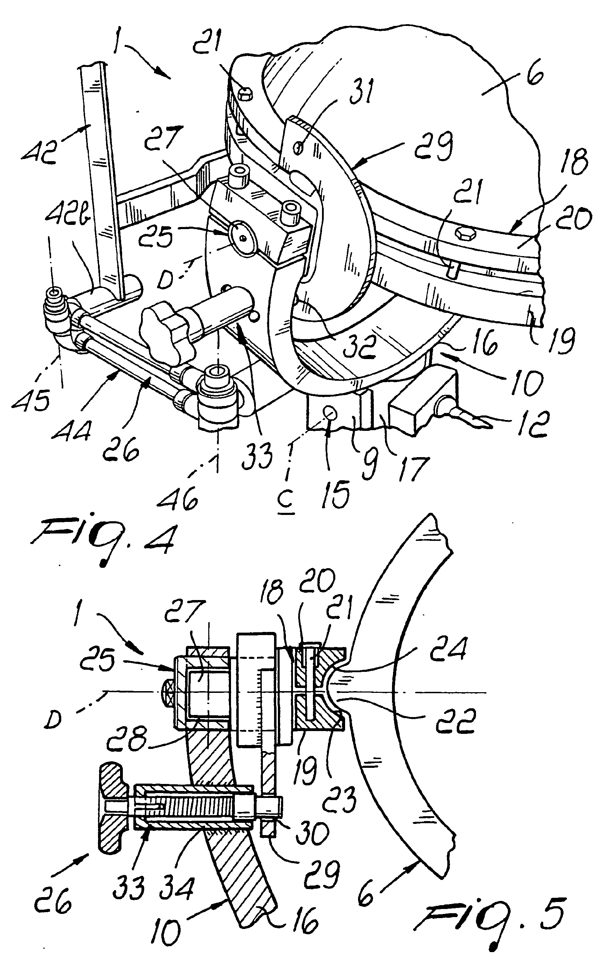

Figure 4 is a schematic enlarged-scale view of a detail of the apparatus according to the invention;
Figure 5 is a schematic sectional view of Figure 4.

### Ways of carrying out the Invention

With reference to the figures, the reference numeral 1 generally designates a laboratory apparatus for grinding loose materials.

The apparatus 1 comprises a supporting frame 2, with which a shaft 3 rotatable about its own axis A is associated; motor means 4, which are suitable to turn the shaft 3; and supporting means 5, associated for joint movement with the shaft 3, for supporting a grinding container 6.

The container 6 is constituted by a globular body that is substantially symmetrical with respect to a longitudinal axis B and tapers into a neck in which there is an opening 7 for introducing the materials to be ground and for withdrawing the ground materials.

The container 6, moreover, is provided with a closure plug and with a screening grate that is associated with the opening 7; in a possible embodiment, the grate can be formed monolithically with the plug.

The container 6 is arranged so that its axis B lies in an eccentric position with respect to the axis A of the shaft 3. motor means 4 and the container 6 traces a circular orbit around the axis A for grinding the materials introduced therein; in the inactive configuration, the shaft 3 is motionless and allows to introduce the materials to be ground in the container 6 or to withdraw the ground materials therefrom.

The supporting means 5 are constituted by a plate-like base 8, coupled for joint motion to one end of the shaft 3, by a support 9, which is associated with the base 8, and by a framework 10 that supports the container 6.

Means for adjusting the eccentricity of the container 6 are interposed between the base 8 and the support 9 and are constituted by a clamp-like support 11, which is coupled to the base 8, and by an arm 12, which lies transversely to the shaft 3 and is inserted slidingly between the jaws of the support 11, its two ends supporting respectively the support 9 and a counterweight 13.

The sliding of the arm 12 with respect to the support 11 allows to adjust the eccentricity or distance of the axis B of the container 6 with respect to the axis A of the shaft 2; the arm 12 is locked by way of fixing or locking means constituted by screws 14 for tightening the two jaws of the support 11.

The framework 10 is articulated, so that it can oscillate about a first axis C that is not parallel, but contained in a plane perpendicular to the axis A of the shaft 3, to the support 9 by way of first articulation means, constituted by a first cylindrical hinge 15.

The hinge 15 allows to incline the framework 10 and therefore the axis B of the container 6 with respect to the axis A of the shaft 3.

In the active configuration, the axis B of the container 6 is inclined with respect to the axis A of the shaft 3 by an angle of 0 to 45 sexagesimal degrees.

Advantageously, the breadth of the angle is substantially equal to 20 sexagesimal degrees.

The framework 10 is constituted by a C-shaped bracket 16 in which the

The framework 10 is constituted by a C-shaped bracket 16 in which the concave side is orientated so as to wrap around the container 6 and the convex side has a shank 17 that is articulated to the support 9 by means of the first hinge 15.

The apparatus 1 further comprises means 18 for anchoring the container 6 to the supporting means 5.

The anchoring means 18 are of the clamp type and comprise: a first jaw, constituted by a first ring 19 that is associable with the framework 10; a second jaw, which is constituted by a second ring 20 that is detachably associable with the first one; and means for coupling and uncoupling the second ring 20 with respect to the first ring 19, which are constituted by a plurality of screws 21.

The container 6 is provided with grip protrusions that are constituted by an annular ridge 22 that is shaped in relief on its outer lateral surface and can be inserted and secured within the two rings 19 and 20.

Along the grip faces of the rings 19 and 20 there are respective seats 23 and 24 for supporting and clamping the ridge 22; conveniently, the ridge 22 is formed proximate to the equatorial line of the body of the container 6.

The container 6 is articulated to the framework 10 so that it oscillates about a second axis D, which is not parallel, but contained in a plane perpendicular to the axis A of the shaft 3, by way of second articulation means, which are constituted by a second cylindrical hinge 25.

Second means 26 for locking the oscillation of the container 6 with respect to the framework 10 are provided.

In the inactive configuration, the second hinge 25 allows to position the container 6 so that the opening 7 is directed upward in order to introduce the materials to be ground or so that the opening 7 is directed downward in order to withdraw the ground materials.

The second hinge 25 is constituted by two opposite pivots 27, whose respective ends are rigidly coupled to the outer edge of the first ring 19 and whose opposite ends are inserted rotatably in corresponding seats 28 formed in the framework 10.

The second locking means 26 are constituted by a plate 29, which is rigidly associated with the first ring or jaw 19.

The plate 29 has three reference holes 30, 31 and 32, which form respectively the active configuration and the two inactive configurations for withdrawing and introducing the materials in the container 6.

A locking pin 33, accommodated in a through hole 34 of the framework 10, can be inserted in one of the holes 30, 31 and 32 in order to block the oscillation of the container 6 about the axis D.

Advantageously, the axes C and D are substantially parallel one another and transverse to the axis A of the shaft 3.

The motor means 4 are constituted by a motor 35 and by transmission means such as a belt 36 wound in a loop around a driving pulley 37, which is rigidly coupled to the driving shaft 38, and a driven pulley 39.

The apparatus 1 further comprises a structure 40 for supporting the framework 10 that allows to balance said framework 10 and guide it in its rotary motion.

The structure 40 is constituted by a portal 41, which is fixed to the frame 2 and to which the end 42a of a swinging bracket 42 is articulated so that it oscillates about an axis E; the opposite end 42b of said bracket is articulated, so as to oscillate about an axis F, to a sort of articulated parallelogram.

The parallelogram is formed by two pairs of linkages 43 and 44, which are parallel and are articulated to the end 42b about first pivots 45 and to the framework 10 about second pivots 46.

The apparatus 1 further comprises means for damping the vibrations generated in the active configuration; said means are constituted for example by shock-absorbing means associated with the ground supporting feet 47 of the frame 2.

It is noted that the counterweight 13 also has a vibration-damping function.

In practice it has been found that the described invention achieves the intended aim and objects.

Finally, the apparatus according to the invention can be inserted and used in an actual production system.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the appended claims.

The disclosures in Italian Patent Application No. MO2001A000218 from which this application claims priority are incorporated herein by reference.

## Claims

1. A laboratory apparatus for grinding loose materials, comprising a frame (2) for supporting a shaft (3) that is mounted for rotation about its own rotation axis (A) and is connected to corresponding motor means (4) and with supporting means (5) for supporting a container (6) that has at least one mouth (7) for introducing and withdrawing the materials and is arranged eccentrically with respect to said shaft (3), the container (6) being provided so as to assume at least one active configuration, in which it traces an orbit around the shaft (3), which is rotationally actuated, and at least one inactive configuration for introducing the materials to be ground and/or for withdrawing the ground materials, **characterized in that** said supporting means (5) comprise articulation means (25) for articulation about an axis (D), contained in a plane perpendicular to the axis (A) but not parallel to it, and locking means (26) for locking said container (6), said articulation means (25) being adapted to incline the container (6) in at least one inactive configuration for introducing the materials to be ground and/or in at least one inactive configuration for withdrawing the ground materials

2. The apparatus according to claim 1, **characterized in that** said supporting means (5) comprise further articulation means (15) for the articulation of said container (6) about a further axis (C), contained in a plane perpendicular to the axis (A) but not parallel to it, which are adapted to incline the container (6) with respect to said shaft (3), and further locking means for locking said container (6).

3. The apparatus according to one or more of the preceding claims, **characterized in that** in the active configuration said container (6) is inclined with respect to said shaft (3) by an angle of 0 to 45 sexagesimal degrees.

4. The apparatus according to one or more of the preceding claims, **characterized in that** in the active configuration said container (6) is inclined with respect to said shaft (3) by an angle of 20 sexagesimal degrees.

5. The apparatus according to one or more of the preceding claims, **characterized in that** said supporting means (5) comprise eccentricity adjusting means (11) for adjusting the eccentricity of said container (6) with respect to said shaft (3).

6. The apparatus according to one or more of the preceding claims, **characterized in that** said supporting means (5) comprise a base (8) that is rigidly coupled to said shaft (3), a support (9) that is associated with said base (8), and a framework (10) that supports said container (6) and is associated with said support (9).

7. The apparatus according to claim 2, **characterized in that** said further articulation means (15) are formed between said framework (10) and said support (9).

8. The apparatus according to claim 2, **characterized in that** said further articulation means comprise at least one first cylindrical hinge (15).

9. The apparatus according to one or more of the preceding claims, **characterized in that** said eccentricity adjustment means (11) are formed between said support (9) and said base (8).

10. The apparatus according to one or more of the preceding claims, **characterized in that** said eccentricity adjustment means (11) comprise an arm (12) that lies transversely to said shaft (3), is slidingly associated with said base (8) and supports said support (9), fixing means (14) for fixing said arm (12) with respect to said base (8) being provided.

11. The apparatus according to claim 1, **characterized in that** said articulation means (25) are formed between said container (6) and said supporting framework (10).

12. The apparatus according to claim 1, **characterized in that** said articulation means comprise at least one second cylindrical hinge (25).

13. The apparatus according to one or more of the preceding claims, **characterized in that** said first (C) and second (D) axes are parallel one another and transverse with respect to said shaft (3).

14. The apparatus according to claim 1, **characterized in that** said locking means (26) comprise at least one plate (29), which is rigidly associated with said container (6) and which comprises at least two reference holes (30, 31, 32) of said inactive configurations, respectively for introducing and withdrawing the materials, and at least one locking pin (33) that is associated with said supporting framework (10) and can be inserted in said holes.

15. The apparatus according to one or more of the preceding claims, **characterized in that** it comprises anchoring means (18) for anchoring said container (6) to said supporting framework (10).

16. The apparatus according to one or more of the preceding claims, **characterized in that** said anchoring means (18) comprise a first jaw (19) that is associable with said framework (10), a second jaw (20) that is detachably associable with the first one (19), and means (21) for rigidly coupling said second jaw (20) to said first jaw (19), the container (6) being provided with grip protrusions (22), which are formed on its outer lateral surface and are suitable to be clamped between said jaws (19, 20).

17. The apparatus according to one or more of the preceding claims, **characterized in that** said locking means (26) are formed between said anchoring means (18) and said supporting framework (10).

18. The apparatus according to one or more of the preceding claims, **characterized in that** said articulation means (25) are formed between said anchoring means (18) and said supporting framework (10).

19. The apparatus according to one or more of the preceding claims, **characterized in that** said plate (29) is rigidly associated with said first jaw (19).

20. The apparatus according to one or more of the preceding claims, **characterized in that** said container (6) is constituted by a globular body that tapers into a neck in which said opening (7) is formed, said body having a ridge (22) that is shaped in relief on its outer lateral surface and is suitable to form said protrusions.

21. The apparatus according to one or more of the preceding claims, **characterized in that** said ridge (22) is formed proximate to the equatorial line of said globular body.

22. The apparatus according to one or more of the preceding claims, **characterized in that** said container (6) comprises a plug for closing said opening (7).

23. The apparatus according to one or more of the preceding claims, **characterized in that** said container (6) comprises a screening grate that is associated with said opening (7).

24. The apparatus according to one or more of the preceding claims, **characterized in that** said first jaw (19) and said second jaw (20) are constituted respectively by two rings in which said container (6) can be inserted at least partially and along which seats (23, 24) for supporting and clamping said protrusions (22) are formed.

25. The apparatus according to one or more of the preceding claims, **characterized in that** it comprises a supporting structure (40) for said supporting framework (10), which is articulated to said frame and to said framework (10).

26. The apparatus according to one or more of the preceding claims, **characterized in that** said supporting structure (40) comprises a portal (41) that is fixed to said frame (2) and a bracket (42) in which one end (42a) is articulated to said portal (41) and the opposite end (42b) is articulated to said supporting framework (10).

27. The apparatus according to one or more of the preceding claims, **characterized in that** it comprises absorbing means for absorbing the vibrations generated in said active configuration.

28. The apparatus according to one or more of the preceding claims, **characterized in that** said absorption means comprise ground resting feet (47) of said frame (2) that have respective shock-absorbing means.

## Patentansprüche

1. Ein Laborgerät zur Zerkleinerung von losem Material, das folgendes umfasst: eine Rahmen (2) zum Halten einer Welle (3), die zur Drehung um ihre eigene Drehachse (A) montiert ist und die mit einem entsprechenden Motormittel (4) und mit Stützmitteln (5) zum Stützen eines Behälters (6) verbunden ist, der mindestens eine Öffnung (7) zum Hineingeben und Entnehmen der Materialien hat und exzentrisch zur Welle (3) angeordnet ist, wobei der Behälter (6) so bereitgestellt wird, dass er mindestens eine aktive Anordnung einnehmen kann, in der er eine Umlaufbahn um die Welle (3) herum verfolgt, die drehbar angetrieben wird, und mindestens eine inaktive Anordnung zum Hineingeben der Materialien, die zerkleinert werden sollen, und/oder zum Herausnehmen der zerkleinerten Materialien, **dadurch gekennzeichnet, dass** die Stützmittel (5) Gelenk-Mittel (25) zur gelenkigen Anordnungen um eine Achse (D) herum umfassen, die in einer Ebene enthalten ist, die rechtwinklig zur Achse (A), aber nicht parallel dazu ist, und Verriegelungsmittel (26) zum Verriegeln des Behälters (6), wobei die Gelenk-Mittel (25) ausgebildet sind, um den Behälter (6) in mindestens einer inaktiven Anordnung zu neigen, zum Hineingeben der Materialien, die zerkleinert werden sollen, und/oder in mindestens einer inaktiven Anordnung zur Entnahme der zerkleinerten Materialien.

2. Die Vorrichtung gemäß Anspruch 1, **dadurch gekennzeichnet, dass** die Stützmittel (5) weiter Gelenk-Mittel (15) zur gelenkigen Anordnung des Behälters (6) um eine weitere Achse (C) herum umfassen, enthalten in einer Ebene, die rechtwinklig zur Achse (A), aber nicht parallel dazu ist, die ausgebildet sind, um den Behälter (6) gegenüber der Welle (3) zu neigen, und weitere Verriegelungsmittel zum Verriegeln des Behälters (6).

3. Die Vorrichtung gemäß einem oder mehreren der obigen Ansprüche, **dadurch gekennzeichnet, dass** in der aktiven Anordnung der Behälter (6) im Verhältnis zur Welle (3) um einen Winkel von 0 bis 45 Sexagesimalgrad geneigt ist.

4. Die Vorrichtung gemäß einem oder mehreren der obigen Ansprüche, **dadurch gekennzeichnet, dass** in der aktiven Anordnung der Behälter (6) im Verhältnis zur Welle (3) um einen Winkel von 20 Sexagesimalgrad geneigt ist.

5. Die Vorrichtung gemäß einem oder mehreren der obigen Ansprüche, **dadurch gekennzeichnet, dass** die Stützmittel (5) Exzentrizitäts-Anpassmittel (11) zur Anpassung der Exzentrizität des Behälters (6) im Verhältnis zur Welle (3) umfassen.

6. Die Vorrichtung gemäß einem oder mehreren der obigen Ansprüche, **dadurch gekennzeichnet, dass** die Stützmittel (5) einen Sockel (8) umfassen, der starr mit der Welle (3) gekoppelt ist, eine Stütze (9), die mit dem Sockel (8) verbunden ist, und ein Gerüst (10), das den Behälter (6) stützt und mit der Stütze (9) verbunden ist.

7. Die Vorrichtung gemäß Anspruch 2, **dadurch gekennzeichnet, dass** weitere Gelenk-Mittel (15) zwischen dem Gerüst (10) und der Stütze (9) geformt sind.

8. Die Vorrichtung gemäß Anspruch 2, **dadurch gekennzeichnet, dass** die weiteren Gelenk-Mittel mindestens ein erstes zylindrisches Scharnier (15) umfassen.

9. Die Vorrichtung gemäß einem oder mehreren der obigen Ansprüche, **dadurch gekennzeichnet, dass** die Exzentrizitäts-Anpassungsmittel (11) zwischen der Stütze (9) und dem Sockel (8) geformt sind.

10. Die Vorrichtung gemäß einem oder mehreren der obigen Ansprüche, **dadurch gekennzeichnet, dass** die Exzentrizitäts-Anpassungsmittel (11) einen Arm (12) umfassen, der transversal zur Welle (3) liegt, verschiebbar mit dem Sockel (8) verbunden ist und die Stütze (9) hält, wobei Befestigungsmittel (14) zur Befestigung des Arms (12) in Bezug zum Sockel (8) bereitgestellt werden.

11. Die Vorrichtung gemäß Anspruch 1, **dadurch gekennzeichnet, dass** die Gelenk-Mittel (25) zwischen dem Behälter (6) und dem stützenden Gerüst (10) geformt sind.

12. Die Vorrichtung gemäß Anspruch 1, **dadurch gekennzeichnet, dass** die Gelenk-Mittel mindestens ein zweites zylindrisches Scharnier (25) umfassen.

13. Die Vorrichtung gemäß einem oder mehreren der obigen Ansprüche, **dadurch gekennzeichnet, dass** die erste (C) und die zweite (D) Achse parallel zueinander und transversal zur Welle (3) sind.

14. Die Vorrichtung gemäß Anspruch 1, **dadurch gekennzeichnet, dass** die Verriegelungsmittel (26) mindestens eine Platte (29) umfassen, die starr mit dem Behälter (6) verbunden ist und die mindestens zwei Bezugslöcher (30, 31, 32) der inaktiven Anordnungen zum Hineingeben bzw. Entnehmen der Materialien umfasst und mindestens einen Verriegelungsstift (33), der mit dem stützenden Gerüst (10) verbunden ist und in die Löcher eingeführt werden kann.

15. Die Vorrichtung gemäß einem oder mehreren der obigen Ansprüche, **dadurch gekennzeichnet, dass** sie Verankerungsmittel (18) zur Verankerung des Behälters (6) am stützenden Gerüst (10) umfasst.

16. Die Vorrichtung gemäß einem oder mehreren der obigen Ansprüche, **dadurch gekennzeichnet, dass** die Verankerungsmittel (18) eine erste Backe (19) umfasst, die mit dem Gerüst (10) verbunden werden kann, eine zweite Backe (20) umfasst, die lösbar mit der ersten (19) verbunden werden kann, und Mittel (21) zur starren Kopplung der zweiten Backe (20) mit der ersten Backe (19) umfasst, wobei der Behälter (6) mit Griffvorsprüngen (22) ausgestattet ist, die an seiner äußeren lateralen Oberfläche geformt und geeignet sind, zwischen den Backen (19, 20) geklemmt zu werden.

17. Die Vorrichtung gemäß einem oder mehreren der obigen Ansprüche, **dadurch gekennzeichnet, dass** die Verriegelungsmittel (26) zwischen den Verankerungsmitteln (18) und dem stützenden Gerüst (10) geformt sind.

18. Die Vorrichtung gemäß einem oder mehreren der obigen Ansprüche, **dadurch gekennzeichnet, dass** die Gelenk-Mittel (25) zwischen den Verankerungsmitteln (18) und dem stützenden Gerüst (10) geformt sind.

19. Die Vorrichtung gemäß einem oder mehreren der obigen Ansprüche, **dadurch gekennzeichnet, dass** die Platte (29) starr mit der ersten Backe (19) verbunden ist.

20. Die Vorrichtung gemäß einem oder mehreren der obigen Ansprüche, **dadurch gekennzeichnet, dass** der Behälter (6) aus einem kugelförmigen Körper besteht, der spitz in einen Hals zuläuft, in dem die Öffnung (7) geformt ist, wobei der Körper einen Grat (22) hat, der an seiner äußeren lateralen Oberfläche in Relief geformt und geeignet ist, die Vorsprünge zu bilden.

21. Die Vorrichtung gemäß einem oder mehreren der obigen Ansprüche, **dadurch gekennzeichnet, dass** der Grat (22) nahe der Äquator-Linie des kugelförmigen Körpers geformt ist.

22. Die Vorrichtung gemäß einem oder mehreren der obigen Ansprüche, **dadurch gekennzeichnet, dass** der Behälter (6) einen Stöpsel zum Verriegeln der Öffnung (7) umfasst.

23. Die Vorrichtung gemäß einem oder mehreren der obigen Ansprüche, **dadurch gekennzeichnet, dass** der Behälter (6) einen Siebrost umfasst, der mit der Öffnung (7) verbunden ist.

24. Die Vorrichtung gemäß einem oder mehreren der obigen Ansprüche, **dadurch gekennzeichnet, dass** die erste Backe (19) und die zweite Backe (20) jeweils aus zwei Ringen bestehen, in die der Behälter (6) zumindest teilweise eingesetzt werden kann und entlang denen Sitze (23, 24) zum Stützen und Klemmen der Vorsprünge (22) geformt sind.

25. Die Vorrichtung gemäß einem oder mehreren der obigen Ansprüche, **dadurch gekennzeichnet, dass** sie eine Stützstruktur (40) für das stützende Gerüst (10) umfasst, die gelenkig mit dem Rahmen und dem Gerüst (10) verbunden ist.

26. Die Vorrichtung gemäß einem oder mehreren der obigen Ansprüche, **dadurch gekennzeichnet, dass** die Stützstruktur (40) ein Portal (41) umfasst, der am Rahmen (2) befestigt ist, und einen Träger (42), in dem ein Ende (42a) gelenkig mit dem Portal (41) verbunden ist und das gegenüberliegende Ende (42b) gelenkig mit dem stützenden Gerüst (10) verbunden ist.

27. Die Vorrichtung gemäß einem oder mehreren der obigen Ansprüche, **dadurch gekennzeichnet, dass** sie Dämpfungsmittel zum Dämpfen der Schwingungen umfasst, die in der aktiven Anordnung erzeugt werden.

28. Die Vorrichtung gemäß einem oder mehreren der obigen Ansprüche, **dadurch gekennzeichnet, dass** die Dämpfungsmittel Bodenauflagefüße (47) des Rahmens (2) umfassen, die jeweilige Stoßdämpfermittel haben.

## Revendications

1. Appareil de laboratoire pour moudre des matériaux en vrac, comprenant un cadre (2) pour supporter un arbre (3) qui est monté pour tourner autour de son axe de rotation (A) et est relié à des moyens moteur (4) correspondant et avec des moyens de support (5) pour supporter un récipient (6) qui présente au moins une ouverture (7) pour l'introduction et le retrait des matériaux et qui est agencé de façon excentrée par rapport audit arbre (3), le récipient (6) étant prévu pour prendre au moins une configuration active, dans laquelle il trace une orbite autour de l'arbre (3), qui est actionné de façon rotative, et au moins une configuration inactive, pour l'introduction des matériaux devant être moulus et/ou pour le retrait des matériaux moulus, **caractérisé en ce** lesdits moyens de support (5) comprennent des moyens d'articulation (25) pour l'articulation autour d'un axe (D), contenus dans un plan perpendiculaire à l'axe (A) mais non parallèle à celui-ci, et des moyens de verrouillage (26) pour verrouiller ledit récipient (6), lesdits moyens d'articulation (25) étant adaptés pour incliner le récipient (6) dans au moins une configuration inactive pour l'introduction des matériaux devant être moulus et/ou au moins une configuration inactive pour le retrait des matériaux moulus.

2. Appareil selon la revendication 1, **caractérisé en ce que** lesdits moyens de support (5) comprennent des moyens d'articulation (15) supplémentaires pour l'articulation dudit récipient (6) autour d'un axe (C) supplémentaire, contenus dans un plan perpendiculaire à l'axe (A) mais non parallèle à celui-ci, qui sont adaptés pour incliner le récipient (6) par rapport audit arbre (3), et des moyens de verrouillage supplémentaires pour verrouiller ledit récipient (6).

3. Appareil selon l'une ou plusieurs des revendications précédentes, **caractérisé en ce que** dans la configuration active ledit récipient (6) est incliné par rapport audit arbre (3) selon un angle compris entre 0 et 45 degrés sexagésimaux.

4. Appareil selon l'une ou plusieurs des revendications précédentes, **caractérisé en ce que** dans la configuration active ledit récipient (6) est incliné par rapport audit arbre (3) selon un angle de 20 degrés sexagésimaux.

5. Appareil selon l'une ou plusieurs des revendications précédentes, **caractérisé en ce que** lesdits moyens de support (5) comprennent des moyens de réglage d'excentricité (11) pour régler l'excentricité dudit récipient (6) par rapport audit arbre (3).

6. Appareil selon l'une ou plusieurs des revendications précédentes, **caractérisé en ce que** lesdits moyens de support (5) comprennent une base (8) qui est couplé de façon rigide audit arbre (3), un support (9) qui est associé à ladite base (8), et un bâti (10) qui supporte ledit récipient (6) et est associé audit support (9).

7. Appareil selon la revendication 2, **caractérisé en ce que** lesdits moyens d'articulation (15) supplémentaires sont formés entre ledit bâti (10) et ledit support (9).

8. Appareil selon la revendication 2, **caractérisé en ce que** lesdits moyens d'articulation supplémentaires comprennent au moins une première charnière (15) cylindrique.

9. Appareil selon l'une ou plusieurs des revendications précédentes, **caractérisé en ce que** lesdits moyens de réglage d'excentricité (11) sont formés entre ledit support (9) et ladite base (8).

10. Appareil selon l'une ou plusieurs des revendications précédentes, **caractérisé en ce que** lesdits moyens de réglage d'excentricité (11) comprennent un bras (12) qui se situe transversalement audit arbre (3), est associé de façon coulissante à ladite base (8) et supporte ledit support (9), des moyens de fixation (14) étant prévus pour fixer ledit bras (12) par rapport à ladite base (8).

11. Appareil selon la revendication 1, **caractérisé en ce que** les moyens d'articulation (25) sont formés entre ledit récipient (6) et ledit bâti de support (10).

12. Appareil selon la revendication 1, **caractérisé en ce que** les moyens d'articulation comprennent au moins une deuxième charnière cylindrique (25).

13. Appareil selon l'une ou plusieurs des revendications précédentes, **caractérisé en ce que** lesdits premier (C) et deuxième (D) axes sont parallèles l'un à l'autre et transversaux par rapport audit arbre (3).

14. Appareil selon la revendication 1, **caractérisé en ce que** lesdits moyens de verrouillage (26) comprennent au moins une plaque (29), qui est associée de façon rigide audit récipient (6) et qui comprend au moins deux trous de référence (30, 31, 32) desdites configurations inactives, respectivement pour l'introduction et le retrait des matériaux, et au moins une goupille de verrouillage (33) qui est associée audit bâti de support (10) et peut être insérée dans lesdits trous.

15. Appareil selon l'une ou plusieurs des revendications précédentes, **caractérisé en ce qu'**il comprend des moyens d'ancrage (18) pour ancrer ledit récipient (6) audit bâti de support (10).

16. Appareil selon l'une ou plusieurs des revendications précédentes, **caractérisé en ce que** lesdits moyens d'ancrage (18) comprennent une première mâchoire (19) qui peut être associée audit bâti (10), une deuxième mâchoire (20) qui peut être associée de façon amovible à la première (19), et des moyens (21) pour coupler de façon rigide ladite deuxième mâchoire (20) à la dite première mâchoire (19), le récipient (6) étant muni de saillies de prise (22), qui sont formées sur sa surface latérale externe et qui sont appropriées pour être serrées entre lesdites mâchoires (19, 20).

17. Appareil selon l'une ou plusieurs des revendications précédentes, **caractérisé en ce que** lesdits moyens de verrouillage (26) sont formés entre lesdits moyens d'ancrage (18) et ledit bâti de support (10).

18. Appareil selon l'une ou plusieurs des revendications précédentes, **caractérisé en ce que** lesdits moyens d'articulation (25) sont formés entre lesdits moyens d'ancrage (18) et ledit bâti de support (10).

19. Appareil selon l'une ou plusieurs des revendications précédentes, **caractérisé en ce que** ladite plaque (29) est associée de façon rigide à ladite première mâchoire (19).

20. Appareil selon l'une ou plusieurs des revendications précédentes, **caractérisé en ce que** ledit récipient (6) est constitué d'un corps globulaire qui s'amincit en un col dans lequel ladite ouverture (7) est formée, ledit corps présentant une arête (22) qui est formée en relief sur sa surface latérale externe et est apte à former lesdits saillies.

21. Appareil selon l'une ou plusieurs des revendications précédentes, **caractérisé en ce que** ladite arête (22) est formée à proximité de la ligne équatoriale dudit corps globulaire.

22. Appareil selon l'une ou plusieurs des revendications précédentes, **caractérisé en ce que** ledit récipient (6) comprend un bouchon pour la fermeture de ladite ouverture (7).

23. Appareil selon l'une ou plusieurs des revendications précédentes, **caractérisé en ce que** ledit récipient (6) comprend une grille de tamisage qui est associée à ladite ouverture (7).

24. Appareil selon l'une ou plusieurs des revendications précédentes, **caractérisé en ce que** ladite première mâchoire (19) et ladite deuxième mâchoire (20) sont constituées respectivement par deux anneaux dans lesquels ledit récipient (6) peut être inséré au moins partiellement et le long desquels des sièges (23, 24) pour le support et le serrage desdites sailles (22) sont formés.

25. Appareil selon l'une ou plusieurs des revendications précédentes, **caractérisé en ce qu'**il comprend une structure de support (40) pour ledit bâti de support (10), qui est articulé audit cadre et audit bâti (10).

26. Appareil selon l'une ou plusieurs des revendications précédentes, **caractérisé en ce que** ladite structure de support (40) comprend un portique (41) qui est fixé audit cadre (2) et un support (42) dans lequel une extrémité (42a) est articulé audit portique (41) et l'extrémité opposé (42b) est articulé audit bâti de support (10).

27. Appareil selon l'une ou plusieurs des revendications précédentes, **caractérisé en ce qu'**il comprend des moyens d'amortissement pour amortir les vibrations générées dans ladite configuration active.

28. Appareil selon l'une ou plusieurs des revendications précédentes, **caractérisé en ce que** lesdits moyens d'amortissement comprennent des pieds d'appui au sol (47) dudit cadre (2) qui présentent des moyens amortisseurs de choc respectifs.
